# EUROPÄISCHE PATENTSCHRIFT

(11) **EP 1 623 118 B1**
(45) Veröffentlichungstag und Bekanntmachung des Hinweises auf die Patenterteilung: **23.08.2006**
(21) Anmeldenummer: 04720526.5
(22) Anmeldetag: 13.03.2004
(51) Int. Cl.: F04B 1/00, F04B 53/20, F04B 53/16

(54) **KOLBENPUMPE**
RECIPROCATING PUMP
POMPE A PISTON

(30) Priorität: 02.04.2003 DE 10314979
(43) Veröffentlichungstag der Anmeldung: 08.02.2006
(73) Patentinhaber: ROBERT BOSCH GMBH, 70442 Stuttgart (DE)
(72) Erfinder: SCHLITZKUS, Michael, 87463 Dietmannsried (DE); WEH, Andreas, 87471 Durach (DE)
(86) Internationale Anmeldenummer: PCT/DE2004/000514
(87) Internationale Veröffentlichungsnummer: WO 2004/088137

(56) Entgegenhaltungen:
- WO-A-03/004872
- DE-A- 4 242 420
- DE-A- 10 112 618
- US-A- 5 123 819

## Beschreibung

### Stand der Technik

Die Erfindung geht aus von einer Kolbenpumpe entsprechend der Gattung des Anspruchs 1. Eine derartige Kolbenpumpe wird insbesondere in Hydraulikaggregaten von hydraulisch steuerbaren Bremsanlagen in Fahrzeugen eingesetzt und dient dazu, den erforderlichen Druck zur Modulation der Bremsdrücke in den verschiedenen Radbremszylindern bereitzustellen.

Eine gattungsgemäße Kolbenpumpe ist beispielsweise aus der DE 199 28 913 A1 oder aus der WO 03004872 bereits bekannt. Diese bekannte Kolbenpumpe besteht u.a. aus einem Pumpengehäuse mit eingebrachter Pumpenbohrung, in die eine Laufbuchse eingesetzt ist. Die Laufbuchse führt einen Pumpenkolben axial, der zu einer hin und her gehenden Hubbewegung antreibbar ist. Dazu wirkt der Kolben mit einem Rückstellelement in Form einer Druckfeder und mit einem rotierenden Exzenter zusammen. Eine Versorgung dieser bekannten Kolbenpumpe mit Druckmittel erfolgt über einen Druckmitteleinlass und einen Druckmittelauslass, die beide in Druckmittel zu- bzw. abführende Kanäle im Pumpengehäuse münden. Zur Dämpfung von Druckpulsationen, die durch das Arbeitsprinzip der Kolbenpumpe bedingt sind, ist eine Drossel im Druckmittel abführenden Auslasskanal vorgesehen. Dieser Auslasskanal ist an der Innenseite eines Verschlussteils ausgebildet, welches die Pumpenbohrung zur Umgebung hin verschließt, Ein Filter zum Schutz der Drossel vor Verstopfung durch Verunreinigungen des Druckmittels ist nicht vorgesehen. Der Auslasskanal verläuft entlang der Stirnfläche der Laufbuchse und mündet unmittelbar in einen radial von der Kolbenpumpe wegführenden Druckmittelkanal ein.

Ausgehend von diesem Stand der Technik liegt der Erfindung die Aufgabe zu Grunde, eine Lösung vorzuschlagen, die auf kostengünstige Weise die Anordnung eines Filters und einer Drossel ermöglicht, gleichzeitig wenig Bauraum beansprucht und darüber hinaus die Möglichkeit bietet, dem Filter ein zusätzliches Dämpfungselement parallel zu schalten, um die Dämpfungseigenschaften weiter zu verbessern. Diese Aufgabe wird von einem Gegenstand mit den Merkmalen des Anspruchs 1 gelöst, indem der Druckmittelauslass zumindest abschnittsweise entlang der Mantelfläche der Laufbuchse geführt ist und indem im Bereich dieses der Mantelfläche entlang geführten Abschnitts ein Filter und eine Drossel einteilig mit der Laufbuchse ausgebildet sind.

### Vorteile der Erfindung

Gegenüber dem aufgezeigten Stand der Technik hat die Erfindung den Vorteil, dass die Dämpfungswirkung weiter verbessert ist, dass einem verschmutzungsbedingten Verstopfen der Drossel und damit einer Beschädigung der Kolbenpumpe durch Vorsehen eines Filters vorgebeugt wird, ohne damit das notwendige Bauvolumen, die Montagekosten oder die Bauteilkosten nennenswert zu erhöhen. Zudem ermöglicht es die vorgeschlagene Lösung, ein zusätzliches Dämpfungsvolumen parallel zum Filter zu schalten und dabei das hierzu erforderliche Dämpfungselement besonders bauraumgünstig und bezüglich eventueller Schallemissionen vorteilhaft senkrecht zur Kolbenpumpe in Richtung eines anzubauenden elektronischen Steuergeräts hin auszurichten.

Weitere Vorteile oder vorteilhafte Weiterbildungen der Erfindung ergeben sich aus den Unteransprüchen und der nachfolgenden Beschreibung.

Gemäß den Ansprüchen 2 und 3 ist es besonders vorteilhaft, das Filter und die Drossel an voneinander getrennten und axial zueinander beabstandeten Radialstegen auszubilden, die in Umfangsrichtung der Laufbuchse verlaufen. Damit lässt sich die Laufbuchse unverändert kostengünstig und präzise als Drehteil herstellen. Aufwändige Bearbeitungsschritte, beispielsweise zur Darstellung eines Kanalverlaufs, wie beim zitierten Stand der Technik, werden eingespart. Entsprechendes gilt für die Darstellung von Filter und Drossel in Form von nach außen offenen Ausnehmungen an den Radialstegen gemäß Anspruch 4. Auch diese Ausbildung ist fertigungstechnisch besonders einfach darstellbar und ist zudem hinsichtlich der Funktionstoleranzen leicht beherrschbar und variierbar. Anspruch 10 schlägt ein besonders wirksames parallel geschaltetes Dämpfungselement vor, in dessen Dämpfungsgehäuse ein Elastomerteil eingesetzt ist. Diese Dämpfungselement schafft nicht nur ein zusätzliches Dämpfungsvolumen, sondern erhöht auf Grund des gegenüber dem Druckmittel geringeren Elastizitätsmoduls des Elastomerteils die Elastizität im System und damit die Dämpfungswirkung. Über die in Längsrichtung verlaufende Ausnehmung im Elastomerteil wird einerseits dessen Montage erleichtert, andererseits die vom Druckmittel beaufschlagte Fläche des Elastomerteils vergrößert. Letzteres wirkt sich in einer Verbesserung der Dämpfungseigenschaften und einer gleichmäßigeren Belastung des Elastomerteils aus.

### Zeichnung

Ein Ausführungsbeispiel der Erfindung ist in der Zeichnung dargestellt und in der nachfolgenden Beschreibung näher erläutert.

Die
- Figur 1: zeigt eine erfindungsgemäße Kolbenpumpe mit zusätzlich angebautem Dämpfungselement, eingebaut in ein Pumpengehäuse im Längsschnitt. In
- Figur 2: ist die Laufbuchse der Kolbenpumpe nochmals als Einzelteil perspektivisch dargestellt.

### Beschreibung des Ausführungsbeispiels

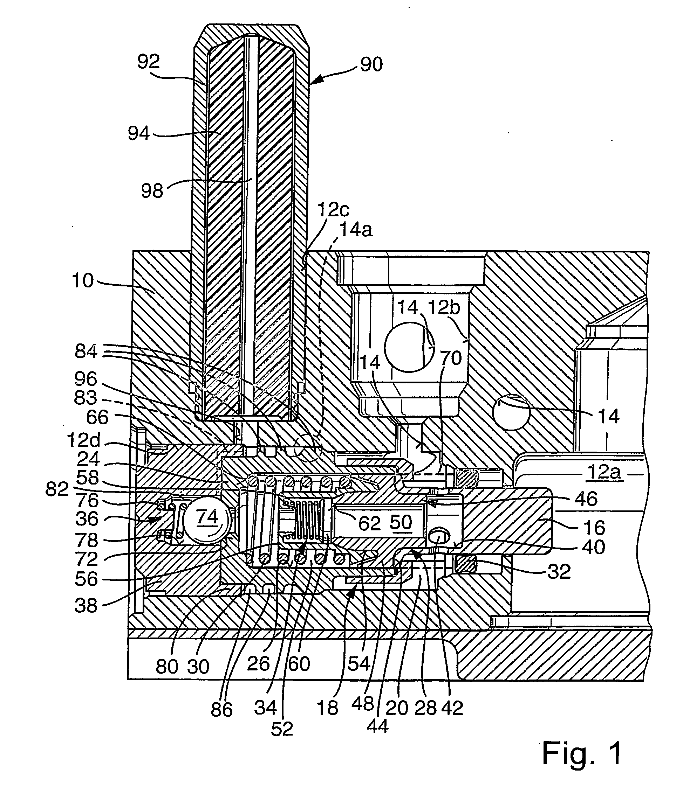

Figur 1 zeigt einen Ausschnitt eines Pumpengehäuses 10 mit darin vorgesehenen Einbauräumen 12 zur Aufnahme verschiedener, aus Übersichtlichkeitsgründen nicht eingezeichneter Bauelemente und mit Druckmittel führenden Kanälen 14, die diese Einbauräume 12 hydraulisch miteinander verbinden. Die Einbauräume 12 sind in ihren Innendurchmessern mehrfach abgesetzt und zu jeweils einer Außenseite des Pumpengehäuses 10 hin offen. Diese Ausbildung erlaubt es, als Pumpengehäuse 10 einen strangpresstechnisch preisgünstig herstellbaren Block aus Leichtmetall zu verwenden und diesen Block zur Darstellung der Einbauräume 12 und Kanäle 14 in möglichst wenig Aufspannungen spanend zu bearbeiten. Die Längsachsen der Einbauräume 12 und Kanäle 14 sind auf Grund fertigungstechnischer Einfachheit im Wesentlichen rechtwinklig zueinander ausgerichtet.

Ein erster mit der Positionsnummer 12a bezeichneter Einbauraum dient der Aufnahme eines nicht dargestellten und zur Betätigung eines Pumpenkolbens 16 einer Kolbenpumpe 18 vorgesehenen Exzenters, ein zweiter Einbauraum 12b ist für die Aufnahme eines mit einem Druckmitteleinlass 20 einer Kolbenpumpe 18 verbundenen Magnetventils (nicht eingezeichnet) vorgesehen, ein dritter Einbauraum 12c begrenzt zusammen mit einem eingepressten, einseitig verschlossenen Hohlkörper ein fakultativ vorsehbares Dämpfungselement 90 zur Dämpfung der von der Kolbenpumpe 18 ausgelösten Druckpulsationen und in einem vierten Einbauraum 12d befindet sich die erfindungsgemäß ausgebildete Kolbenpumpe 18 selbst.

Diese Kolbenpumpe 18 umfasst eine Laufbuchse 24 mit mehrfach abgesetzter Durchgangsöffnung 26, ein koaxial dazu festgelegtes Filterelement 28, einen beweglich geführten, von einer Rückstellfeder 30 beaufschlagten Pumpenkolben 16 und insgesamt zwei federbeaufschlagte, den Durchfluss von Druckmittel durch die Kolbenpumpe 18 steuernde Ventile 34, 36. Ein am Filterelement 28, am Pumpenkolben 16 und am Pumpengehäuse 10 anliegender Dichtring 32 dient der Abdichtung des Einbauraums 12a des Exzenters gegenüber den Druckmittel führenden Bereichen des Pumpengehäuses 10; der Einbauraum 12d der Kolbenpumpe 18 selbst, ist mittels eines Verschlussdeckels 38 nach außen verschlossen.

Der Pumpenkolben 16 ist zylindrisch ausgeführt und an seinem der Laufbuchse 24 zugewandten Ende mit einer Sacklochbohrung 40 versehen. Querbohrungen 42 münden im Bereich des inneren Endes in diese Sacklochbohrung 40 ein und stehen mit dem Druckmitteleinlass 20 der Kolbenpumpe 18 in Verbindung. Das die Sacklochbohrung 40 aufweisende Kolbenende ist nach außen zu einem umlaufenden Ringwulst 44 aufgeweitet, an dessen äußerer Stirnfläche ein Kolbenführungselement 46 anliegt.

Dieses Kolbenführungselement 46 ist hülsenförmig aus Elastomermaterial hergestellt, ragt abschnittsweise in die Sacklochbohrung 40 des Pumpenkolbens 16 hinein und weist umfangsseitig eine Dichtungskontur 48 auf, mit der das Kolbenführungselement 46 an der Innenseite der Laufbuchse 24 anliegt. Die Dichtungskontur 48 trennt eine erste Druckmittelkammer 50 von einer zweiten Druckmittelkammer 52 der Kolbenpumpe 18, wobei beide Druckmittelkammern 50, 52 aufgrund der die Hubbewegung des Pumpenkolbens 16 ihr Volumen ändern. Diese Volumenveränderung erfolgt gegenläufig, so dass durch einen Pumpvorgang Druckmittel aus der einen Druckmittelkammer 50 in die andere Druckmittelkammer 52 strömt. Dabei schließen und öffnen die beiden Ventile 34 und 36 im Wechsel.

Die erwähnte Dichtungskontur 48 ergibt sich im Wesentlichen durch eine umlaufende, konisch nach innen zulaufende und zum Druckraum 52 hin offene Ringnut 54 am Kolbenführungselement 46. In diese Ringnut 54 greift eine entsprechend geformte Wandung eines am Kolbenführungselement 46 verankerten Ventilkäfigs 56 ein. Dieser Ventilkäfig 56 ist hutförmig ausgebildet und bildet die erste Abstützung einer einliegenden Ventilfeder 58 des Einlassventils 34. Eine ebenfalls innerhalb des Ventilkäfigs 56 beweglich aufgenommene Ventilplatte 60, zur Steuerung eines am Ende des hülsenförmigen Kolbenführungselement 46 ausgebildeten Ventilsitzes 62, stellt die gegenüberliegende zweite Abstützung dieser Ventilfeder 58 dar. Der Ventilkäfig 56 liegt abschnittsweise im Inneren der Rückstellfeder 36, welche sich an einer durch den Absatz der Durchgangsöffnung 26 gebildeten Schulter 66 der Laufbuchse 24 und an einer Durchmessererweiterung am Ende des Ventilkäfigs 56 abstützt. Damit stellt die Rückstellfeder 30 die Anlage des Pumpenkolbens 16 an der Umfangsfläche des in der Figur 1 nicht gezeichneten Exzenters sicher.

In das vorzugsweise spritzgusstechnisch herstellbare Filterelement 28 ist ein Filtersieb 70 eingespritzt. Dieses Filtersieb 70 hält Verunreinigungen aus dem Druckmittel aus den beiden Druckmittelkammern 50, 52 der Kolbenpumpe 18 fern. Dazu deckt das Filtersieb 70 die einlassseitigen Querbohrungen 42 des Pumpenkolbens 16 ab.

Das zweite, den Druckmittelauslass 82 der Kolbenpumpe 18 steuernde Auslassventil 36 umfasst einen an der Stirnseite der Laufbuchse 24 vorgesehenen und am Ende der Durchgangsöffnung 26 der Laufbuchse 24 liegenden Ventilsitz 72, ein Ventilschließglied 74 in Form einer Kugel, zur Steuerung dieses Ventilsitzes 72 und eine das Ventilschließglied 74 beaufschlagenden Ventilfeder 76. Letztere stützt sich dazu in einer sacklochartigen Federaufnahme 78 des Verschlussdeckels 38 ab.

Dieser Verschlussdeckel 38 ist in den Einbauraum 12d der Kolbenpumpe 18 eingepresst und mittels eines axial vorstehenden Bundes 80 mit der Laufbuchse 24 wirkverbunden.

Mit seinem in das Innere des Einbauraums 12d weisenden Ende liegt der Verschlussdeckel 38 an der Stirnfläche der Laufbuchse 24 an. Eine nutförmige Ausnehmung entlang dieser Stirnfläche und entlang der Innenseite des umlaufenden Bundes 80 bildet einen Auslasskanal 83, welcher den Druckmittelauslass 82 der Kolbenpumpe 18 mittelbar mit einem pumpengehäuseseitigen Druckmittelkanal 14a verbindet. Vor der Einmündung in den Druckmittelkanal 14a strömt das Druckmittel somit abschnittsweise entlang der Mantelfläche der Laufbuchse 24. Dazu ist die Laufbuchse 24 in ihrem Außendurchmesser gegenüber dem Innendurchmesser des Einbauraums 12d zurückgenommen und mit umlaufenden, einteilig an ihr ausgebildeten Radialstegen 84 versehen. Diese Radialstege 84 liegen umfangsseitig an der Wandung des Einbauraums 12d an und sind in Richtung der Längsachse der Kolbenpumpe 18 axial zueinander beabstandet. Dadurch ergeben sich axial mehrere hintereinanderliegende Ringräume 86.

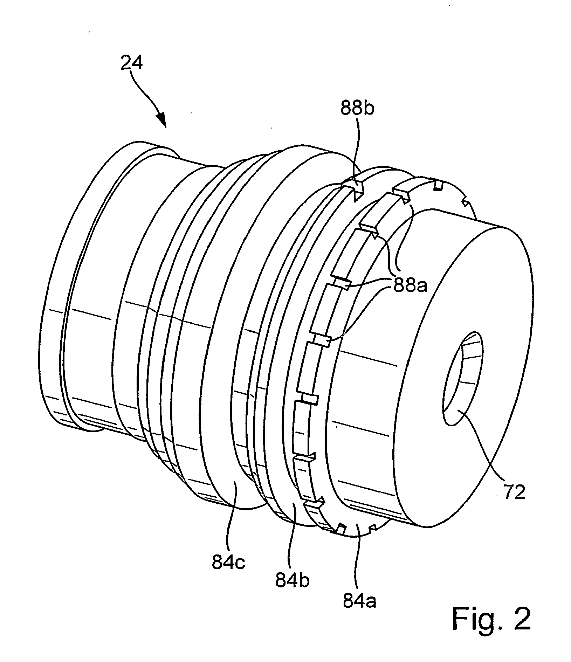

Der dem Druckmittelauslass 82 zugewandte erste Radialsteg 84a bildet ein Filter, das als Spaltfilter ausgebildet ist, indem es mehrere, über den Umfang des Radialstegs 84a verteilt angeordnete, nutförmige Ausnehmungen 88 aufweist (Figur 2). Diese Ausnehmungen 88 sind zur Außenseite hin offen und durchdringen den Radialsteg 84a. Sie ermöglichen damit den Durchtritt von Druckmedium vom einen zum anderen Ringraum 86a, 86b, halten jedoch auf Grund ihrer Anzahl und Dimensionierung im Druckmittel enthaltene Schmutzpartikel zurück. Der dem ersten Radialsteg 84a nachgeordnete zweite Radialsteg 84b bildet eine Drossel, welche ebenfalls als Spaltdrossel ausgeführt ist. Diese Drossel ist ebenfalls von wenigstens einer Ausnehmung 88b gebildet, die den zugeordneten Radialsteg 84b durchdringt und zur Umfangsseite hin offen ist. Ihr Querschnitt ist auf die Querschnitte des Filters derart abgestimmt, dass die Summe der einzelnen Querschnitte des Filters ein Vielfaches des Drosselquerschnitts ergeben, jeder einzelne Querschnitt des Filters jedoch kleiner als der Querschnitt der Drossel ist. Vorzugsweise sind die Ausnehmungen 88a des Filters radial gegenüber den Ausnehmungen 88b der Drossel versetzt, um auf Grund der sich dadurch ergebenden Strömungsumlenkung eine besonders gute Dämpfungswirkung zu erzielen. Das Filter beugt einer Verstopfung der Drossel durch Verunreinigungen aus dem Druckmedium vor und verhindert damit einen Druckanstieg im Hochdruckbereich der Kolbenpumpe 18 auf ein Niveau, das ein Auspressen des Verschlussdeckels 38 und/oder eine hydraulische Überlastung der erläuterten Bauteile der Kolbenpumpe 18 verursachen könnte.

Besonders kostengünstig als Drehteil ist die Laufbuchse 24 darstellbar, wenn die beiden das Filter und die Drossel bildenden Radialstege 84 gleiche Außendurchmesser haben. Im eingebauten Zustand der Kolbenpumpe 18 gehen die Radialstege 84 mit der Wandung des Einbauraums 12d eine Pressverbindung ein.

Ein dritter, der Drossel nachgeordneter Radialsteg 84c liegt mit seiner dem Pumpenkolben 16 zugewandten Vorderseite an einer Stufe des Einbauraums 12d an und dichtet dadurch den davor liegenden, Niederdruck führenden Druckmitteleinlass 20 der Kolbenpumpe 18 vom filter- und drosselseitigen, Hochdruck führenden Druckmittelauslass 82 der Kolbenpumpe 18 ab. Der pumpengehäuseseitige, das Druckmittel abführende Kanal 14a beginnt zwischen dem zweiten und dem dritten Radialsteg 84b, 84c der Laufbuchse 24, also stromabwärts der Drossel.

Eine zusätzliche Verbesserung dieser Dämpfungseigenschaften ist beim dargestellten Ausführungsbeispiel bewerkstelligt durch ein angebautes Dämpfungselement 90. Dieses Dämpfungselement 90 besteht aus einem einseitig offenen Hohlkörper 92 mit einem darin eingesetzten Elastomerteil 94. Das Dämpfungselement 90 ist im Wesentlichen senkrecht zur Längsachse der Kolbenpumpe 18 ausgerichtet und steht über das Pumpengehäuse 10 auf der Seite vor, an der im montierten Endzustand ein elektronisches Steuergerät zur Steuerung einer Fahrzeugbremsanlage anbaubar ist. Das Dämpfungselement 90 ist hydraulisch an den Auslass 82 der Kolbenpumpe 18 über einen einzigen Verbindungskanal 96 angeschlossen, der hydraulisch gesehen im Bereich vor dem Filter mündet. Das Dämpfungselement 90 stellt somit ein parallel geschaltetes zusätzliches Dämpfungsvolumen zur Verfügung, ohne selbst vom Druckmittel durchströmt zu werden.

Der Hohlkörper 92 ist abschnittsweise in dem vorgesehenen Einbauraum 12c verankert. Dazu weist das Dämpfungselement 90 am offenen Ende dieses Hohlkörpers 92 eine Kontur aus umlaufenden Stegen und Nuten auf, die durch plastische Materialverformung während des Einpressvorgangs das Material des Pumpengehäuses 10 in diese Nuten hinein verdrängt. Dabei bildet sich ein druckdichter Formschluss zwischen beiden Bauteilen aus, ohne dass eine unerwünschte Spanbildung auftritt.

Das in den Hohlkörper 92 eingesetzte Elastomerteil 94 weist durchgehende Längsausnehmungen 98 auf. Diese lassen einerseits beim Einbau des Elastomerteils 94 die im Hohlkörper 92 enthaltene Luft abströmen und vergrößern andererseits die druckbeaufschlagte Fläche des Elastomerteils 94 und vergleichmäßigen damit die auf das Elastomerteil 94 einwirkenden Druckbelastungen. Als Material für das Elastomerteil 94 eignet sich insbesondere Silikonkautschuk auf Grund seiner Resistenz gegenüber dem verwendeten Druckmedium in Fahrzeugbremsanlagen und auf Grund seines gegenüber dem Druckmedium geringeren Elastizitätsmoduls. Dadurch kann mit einem relativ geringen Volumen des Dämpfungselements 90 eine für die gewünschten Dämpfungseigenschaften ausreichend große Elastizität dargestellt werden.

Das Zusammenwirken des Dämpfungselements 90 mit der Drossel reduziert die Auswirkungen von Druckpulsationen im Fahrzeuginnenraum auf ein gewünschtes Maß, wobei die jeweiligen Dämpfungseigenschaften durch Dimensionierung, Formgebung und gegenseitige Abstimmung von Dämpfungselement 90 und Spaltdrossel an den jeweiligen individuellen Einsatzfall anpassbar sind. Diesbezüglich ist anzumerken, dass es nicht zwangsweise erforderlich ist, die an der Laufbuchse 24 vorgesehene Drossel mit einem Dämpfungselement 90 zu koppeln, um eine Dämpfungswirkung zu bewirken.

Figur 2 zeigt die Laufbuchse 24 nochmals als Einzelteil, wobei die Bezugszeichen aus Figur 1 für die einander entsprechenden Bauteile übernommen wurden. Ergänzend zur Darstellung der Figur 1 zeigt Figur 2 die an den Radialstegen 84a und b angebrachten nutförmigen Ausnehmungen 88a und b, welche im Falle des Radialstegs 84a das Spaltfilter und im Falle des Radialstegs 84b die Spaltdrossel bilden. Diese Spaltdrossel kann aus mehreren solcher Ausnehmungen 88b bestehen. Abgesehen davon zeigt Figur 2 den als Kegelsitz ausgebildeten Ventilsitz 72 des Auslassventils 36, welcher sich, wie bereits erläutert, am stirnseitigen Ende der Laufbuchse 24 befindet.

Selbstverständlich sind Weiterbildungen oder Ergänzungen am beschriebenen Ausführungsbeispiel möglich, ohne vom Grundgedanken der Erfindung abzuweichen. Dieser Grundgedanke wird im wesentlichen in einer möglichst kosten- und bauraumneutralen Integration eines Filters und einer Drossel bei einer Kolbenpumpe 18 gesehen.

## Patentansprüche

1. Kolbenpumpe (18), insbesondere für ein Hydraulikaggregat einer elektronisch regelbaren Fahrzeugbremsanlage, mit einem, wenigstens einen Einbauraum (12) aufweisenden Pumpengehäuse (10), einer in den Einbauraum (12) eingesetzten Laufbuchse (24), die einen zu einer Hubbewegung antreibbaren Pumpenkolben (16) axial führt, mit wenigstens einem durch die Hubbewegung des Pumpenkolbens (16) im Volumen veränderlichen Druckraum (50) und mit einem in den Druckraum mündenden Druckmitteleinlass (20) und einem Druckmittelauslass (82), **dadurch gekennzeichnet, dass** der Druckmittelauslass (82) zumindest abschnittsweise entlang der Mantelfläche der Laufbuchse (24) geführt ist und dass im Bereich dieses der Mantelfläche entlang verlaufenden Abschnitts ein Filter und eine Drossel einteilig mit der Laufbuchse (24) ausgebildet sind.

2. Kolbenpumpe nach Anspruch 1, **dadurch gekennzeichnet, dass** das Filter und die Drossel an umlaufenden, axial zueinander beabstandeten Radialstegen (84a, 84b) der Laufbuchse (24) ausgebildet sind, wobei diese Radialstege (84a, 84b) umfangseitig mit der Wandung des Einbauraums (12) der Kolbenpumpe (18) eine druckmitteldichte Verbindung eingehen.

3. Kolbenpumpe nach Anspruch 1 oder 2, **dadurch gekennzeichnet, dass** das Pumpengehäuse (10) wenigstens zwei Radialstege (84a, 84b) hat, wobei das Filter dem stromaufwärtigen ersten Radialsteg (84a) und die Drossel dem stromabwärtigen zweiten Radialsteg (84b) zugeordnet ist.

4. Kolbenpumpe nach einem der Ansprüche 1 bis 3, **dadurch gekennzeichnet, dass** das Filter als Spaltfilter und die Drossel als Spaltdrossel ausgebildet sind, indem die entsprechenden Radialstege (84a, 84b) über ihren Umfang verteilt angeordnete, nutförmige Ausnehmungen (88a, 88b) aufweisen, welche die Radialstege (84a, 84b) axial durchdringen, wobei die einzelnen Ausnehmungen (88a) des Filters jeweils einen geringeren vom Druckmittel durchströmten Querschnitt, als der Querschnitt der Drossel haben, die Summe der Strömungsquerschnitte der Ausnehmungen (88a) des Filters jedoch ein Mehrfaches des Strömungsquerschnitts der Drossel aufweisen.

5. Kolbenpumpe nach einem der Ansprüche 1 bis 4, **dadurch gekennzeichnet, dass** die Drossel mehrere über den Umfang des zugeordneten Radialstegs (84b) verteilt angeordnete Ausnehmungen (88b) umfasst.

6. Kolbenpumpe nach einem der Ansprüche 1 bis 5, **dadurch gekennzeichnet, dass** die das Filter und die Drossel bildenden Ausnehmungen (88a, 88b) der jeweiligen Radialstege (84a, 84b) in Strömungsrichtung radial zueinander versetzt angeordnet sind.

7. Kolbenpumpe nach einem der Ansprüche 1 bis 6, **dadurch gekennzeichnet, dass** die Radialstege (84a, 84b) mit der Wandung des Einbauraums (12) eine Pressverbindung eingehen und dass neben dem das Filter und die Drossel bildenden Radialstegen (84a, 84b) wenigstens ein dritter Radialsteg (84c) an der Laufbuchse (24) vorgesehen ist, welcher den Druckmitteleinlass (20) gegenüber dem Druckmittelauslass (82) abdichtet.

8. Kolbenpumpe nach Anspruch 7, **dadurch gekennzeichnet, dass** die Radialstege (84a, 84b) von Filter und Drossel gleiche Außendurchmesser aufweisen.

9. Kolbenpumpe nach einem der Ansprüche 1 bis 8, **dadurch gekennzeichnet, dass** dem Filter ein Dämpfungselement (90) hydraulisch parallel geschaltet ist, dessen Anordnung derart gewählt ist, dass seine Längsachse quer zur Längsachse der Kolbenpumpe (18) verläuft.

10. Kolbenpumpe nach einem der Ansprüche 1 bis 9, **dadurch gekennzeichnet, dass** das Dämpfungselement (90) einen einseitig offenen Hohlkörper (92) umfasst, in dessen Innenraum ein Elastomerteil (94) mit wenigstens einer in Längsrichtung durchgehender Ausnehmung (98) eingesetzt ist.

## Claims

1. Reciprocating pump (18), in particular for a hydraulic assembly of an electronically regulatable vehicle brake system, with a pump casing (10) having at least one installation space (12), with a liner (24) which is inserted into the installation space (12) and axially guides a pump piston (16) drivable in a stroke movement, with at least one pressure space (50) variable in volume as a result of the stroke movement of the pump piston (16), and with a pressure-medium inlet (20) issuing into the pressure space and a pressure-medium outlet (82), **characterized in that** the pressure-medium outlet (82) is led, at least in a portion, along the outer surface area of the liner (24), and **in that**, in the region of this portion running along the outer surface area, a filter and a throttle are produced in one piece with the liner (24).

2. Reciprocating pump according to Claim 1, **characterized in that** the filter and the throttle are produced on peripheral radial webs (84a, 84b) of the liner (24) which are spaced axially apart from one another, these radial webs (84a, 84b) making circumferentially with the wall of the installation space (12) of the reciprocating pump (18) a connection which is tight to a pressure medium.

3. Reciprocating pump according to Claim 1 or 2, **characterized in that** the pump casing (10) has at least two radial webs (84a, 84b), the filter being assigned to the upstream first radial web (84a) and the throttle being assigned to the downstream second radial web (84b).

4. Reciprocating pump according to one of Claims 1 to 3, **characterized in that** the filter is designed as a gap filter and the throttle is designed as a gap throttle, **in that** the corresponding radial webs (84a, 84b) have groove-shaped recesses (88a, 88b) which are arranged so as to be distributed over their circumference and which penetrate the radial webs (84a, 84b) axially, the individual recesses (88a) of the filter having in each case a smaller cross section through which the pressure medium flows than the cross section of the throttle, but the sum of the flow cross sections of the recesses (88a) of the filter being a multiple of the flow cross section of the throttle.

5. Reciprocating pump according to one of Claims 1 to 4, **characterized in that** the throttle comprises a plurality of recesses (88b) arranged so as to be distributed over the circumference of the assigned radial web (84b).

6. Reciprocating pump according to one of Claims 1 to 5, **characterized in that** the recesses (88a, 88b) of the respective radial webs (84a, 84b), the said recesses forming the filter and the throttle, are arranged so as to be offset radially with respect to one another in the flow direction.

7. Reciprocating pump according to one of Claims 1 to 6, **characterized in that** the radial webs (84a, 84b) make with the wall of the installation space (12) a press connection, and **in that**, next to the radial webs (84a, 84b) forming the filter and the throttle, at least a third radial web (84c) on the liner (24) is provided, which seals off the pressure-medium inlet (20) with respect to the pressure-medium outlet (82).

8. Reciprocating pump according to Claim 7, **characterized in that** the radial webs (84a, 84b) of the filter and throttle have identical outside diameters.

9. Reciprocating pump according to one of Claims 1 to 8, **characterized in that** the filter has connected to it hydraulically in parallel a damping element (90), the arrangement of which is selected such that its longitudinal axis runs transversely with respect to the longitudinal axis of the reciprocating pump (18).

10. Reciprocating pump according to one of Claims 1 to 9, **characterized in that** the damping element (90) comprises a hollow body (92) open on one side, in the interior of which an elastomeric part (94) having at least one recess (98) continuous in the longitudinal direction is inserted.

## Revendications

1. Pompe à piston (18), en particulier pour un groupe hydraulique d'un dispositif de freinage de véhicule à régulation électronique, comprenant un corps de pompe (10) présentant au moins une chambre (12), une chemise de cylindre (24) placée la chambre (12) et guidant axialement un piston de pompe (16) entraîné linéairement, au moins une chambre de pression (50) modifiée en volume par la course du piston de pompe (16), une entrée de fluide de pression (20) débouchant dans la chambre de pression et une sortie de fluide de pression (82),
**caractérisée en ce que**
la sortie de fluide de pression (82) passe au moins par section le long de la surface enveloppe de la chemise de cylindre (24) et un filtre et un étranglement sont intégrés à la chemise de cylindre (24) dans la zone de cette section s'étendant le long de la surface enveloppe.

2. Pompe à piston selon la revendication 1,
**caractérisée en ce que**
le filtre et l'étranglement sont formés sur des entretoises radiales (84a, 84b) périphériques de la chemise de cylindre (24), écartées axialement les unes des autres, ces entretoises radiales (84a, 84b) étant reliées à la paroi de la chambre (12) de la pompe à piston (18) de manière étanche au fluide de pression côté périphérie.

3. Pompe à piston selon la revendication 1 ou 2,
**caractérisée en ce que**
le corps de pompe (10) a au moins deux entretoises radiales (84a, 84b), le filtre étant associé à la première entretoise radiale (84a) en amont de l'écoulement et l'étranglement étant associé à la deuxième entretoise radiale (84b) en aval de l'écoulement.

4. Pompe à piston selon l'une quelconque des revendications 1 à 3,
**caractérisée en ce que**
le filtre est un filtre à disques et l'étranglement un étranglement à disques par le fait que les entretoises radiales correspondantes (84a, 84b) présentent des évidements (88a, 88b) en forme de rainure répartis à la périphérie et traversant axialement les entretoises radiales (84a, 84b), les différents évidements (88a) du filtre ayant respectivement une section transversale traversée par le fluide de pression plus petite que la section transversale de l'étranglement, mais dont la somme des sections transversales d'écoulement des évidements (88a) du filtre est un multiple de la section transversale d'écoulement de l'étranglement.

5. Pompe à piston selon l'une quelconque des revendications 1 à 4,
**caractérisée en ce que**
l'étranglement comprend plusieurs évidements (88b) répartis à la périphérie de l'entretoise radiale associée (84b).

6. Pompe à piston selon l'une quelconque des revendications 1 à 5,
**caractérisée en ce que**
les évidements formant le filtre et l'étranglement (88a, 88b) des entretoises radiales respectives (84a, 84b) sont décalés radialement les uns par rapport aux autres dans le sens d'écoulement.

7. Pompe à piston selon l'une quelconque des revendications 1 à 6,
**caractérisée en ce que**
les entretoises radiales (84a, 84b) sont reliées par pression à la paroi de la chambre (12) et, outre les entretoises radiales (84a, 84b) formant le filtre et l'étranglement, au moins une troisième entretoise radiale (84c) sur la chemise de cylindre (24) rend l'entrée de fluide de pression (20) étanche par rapport à la sortie de fluide de pression (82).

8. Pompe à piston la revendication 7,
**caractérisée en ce que**
les entretoises radiales (84a, 84b) du filtre et de l'étranglement présentent les mêmes diamètres extérieurs.

9. Pompe à piston selon l'une quelconque des revendications 1 à 8,
**caractérisée en ce qu'**
un élément amortisseur (90) branché parallèlement au filtre sur le plan hydraulique est monté avec son axe longitudinal en biais par rapport à l'axe longitudinal de la pompe à piston (18).

10. Pompe à piston selon l'une quelconque des revendications 1 à 9,
**caractérisée en ce que**
l'élément amortisseur (90) comprend un corps creux (92) ouvert d'un côté et dont l'espace intérieur loge une pièce élastomère (94) avec au moins un évidement (98) continu dans la direction longitudinale.
